# EUROPEAN PATENT SPECIFICATION

(11) **EP 2 934 165 B1**
(45) Date of publication and mention of the grant of the patent: **08.01.2020**
(21) Application number: 13799171.7
(22) Date of filing: 20.11.2013
(51) Int. Cl.: A23G 1/00, A23G 1/54, A23G 3/34, A23G 3/54

(54) **PROCESS FOR MAKING A CONFECTION WITH SUPPORTED FILLING**
VERFAHREN ZUR HERSTELLUNG EINES KONFEKTS MIT GESTÜTZER FÜLLUNG
PROCÉDÉ POUR FOURNIR UNE CONFISERIE AVEC FOURRAGE SOUTENU

(30) Priority: 21.12.2012 US 201261740987 P
(43) Date of publication of application: 28.10.2015
(73) Proprietor: Mars, Incorporated, McLean, VA 22101 (US)
(72) Inventor: KESSELL, Gwendolyn, Hackettstown, New Jersey 07840 (US)
(74) Representative: Carpmaels & Ransford LLP
(86) International application number: PCT/US2013/070978
(87) International publication number: WO 2014/099229

(56) References cited:
- US-A1- 2005 025 879
- US-A1- 2007 172 565
- US-A1- 2011 189 370
- US-A1- 2012 003 359
- US-A1- 2012 164 268
- US-A1- 2012 164 280
- US-B1- 6 514 555
- US-B1- 6 887 503
- Christina Blais: "The secret of the Caramilk(TM) bar | Food chemistry | Articles | Ricardo", Ricardocuisine, 9 August 2010 (2010-08-09), pages 1-1, XP055100995, Retrieved from the Internet: URL:http://www.ricardocuisine.com/articles /food-chemistry/303-the-secret-of-the-cara milk--bar [retrieved on 2014-02-07]

## Description

### FIELD

The present invention relates to methods for making filled confections.

### BACKGROUND

Multi-textured confections are desired by consumers for the enjoyable eating experience they provide. Yet, such confections can be difficult to manufacture in such a way that each texture is accessible in each bite. For example, if fillings of different viscosities and/or comprising particulates are desirably present within the same chamber, they may not stay in the desired arrangement over time, i.e., the filling having the higher viscosity or particulate may sink to the bottom. Leakage during manufacture, packaging transport and storage is also a possibility, and if during manufacture, can necessitate shut down and clean up of equipment. After manufacture, filling leakage can impact shelf stability and saleability.

Furthermore, even though multitextured confections are desired by consumers, they can yet be difficult to consume. Low viscosity fillings, for example, can have a tendency to leak when a chamber enclosing them is bitten into. Though messy to enjoy, consumers who desire such confections are reluctant to sacrifice other components of the consuming experience to remedy the problem. That is, consumers desire larger confections that may not be capable of consumption in one bite, thereby requiring the filling chamber to be bitten into. Altering the texture or flavor of the filling components, as by use of gelling agents or fibers, or significantly altering the ratio of shell to filling as by reducing the amount of filling, may not be desirable in all flavor profiles, and is not expected to enjoy consumer acceptance.

US 2012/164280 discloses a candy wherein loss of a soft component contained therein is minimized, said to allow the benefits of the soft component to be enjoyed, and a feeling of roughness in the mouth is said to be reduced.

US 2005/025879 discloses a candy product of chocolate and of a syrup confectionery composition which are interspersed so that the syrup confectionery composition defines a plurality of veins dispersed in the product.

US 2012/164268 discloses a confectionery composition which is said to be able to provide a new and improved flavour and texture experience for a consumer. The confectionery composition has interconnected pores therein which contain a fill material.

US 6,887,503 discloses two or more different materials such as food material are co-extruded through adjacent orifices of an extruder. The flows of the two materials are cut in a direction transverse to the flow to form segments of flow. These segments are interspersed so as to join upstream and downstream of each segment of first material to a segment of a second material.

US 6,514,555 discloses composite articles of frozen confectionery manufactured containing inclusions, by forming extrusions of a central filling surrounded by a sleeve of frozen composition by co-extrusion at a temperature for the frozen composition of less than or equal to about -8 °C, and the extrusions are then processed into a mass of frozen composition incorporating the inclusions by coiling up the extrusion or folding it on itself.

US 2012/003359 discloses a fat-based confectionery material with a continuous fat phase characterised in that the material is dispersed with bubbles containing a liquid filling and methods for the production thereof.

The Caramilk™ is a chocolate bar containing caramel.

US 2007/172565 discloses that, prior to cooling, an air knife is used to remove bubbles from confectionery-filled chocolates, preferably center-filled chocolates, deposited in a mold tray, preferably using a one-shot depositor.

US 2011/189370 discloses a process for the preparation of centre-filled chocolate products and one-shot deposited centre-filled chocolate products.

It would thus present an advantage to the art to provide filled confections that can be consumed with minimized filling leakage during consumption. Further benefit would be realized if the confections provided a flavor profile and consuming experience similar to that provided by conventional filled chocolate confections. Methods of making such confections that allow multiple fillings to be utilized, wherein the filling arrangement is substantially maintained throughout manufacture, curing, shipping and/or storage of the confection would also be appreciated.

### BRIEF DESCRIPTION

The present invention is defined by the claims and provides a process for making such confections. More particularly, the confections comprise a shell providing a chamber having a non-gelatinous supportive filling and at least one other filling. The supportive filling may generally be solid at ambient temperature, while the at least one other filling may flow at room temperature. The supportive filling and at least one other filling are interspersed throughout the chamber so that the supportive filling provides support to the other filling, e.g., the supportive filling acts to reduce the tendency of the at least one other filling to flow or leak out of the confection once the chamber has been accessed. And so, when a consumer bites into the chamber, less of the at least one other filling leaks out of the confection as compared to filled confections not comprising the supportive filling. Because the supportive filling is non-gelatinous, the confection need not have a gelatinous texture, and consumer acceptance may be enhanced, especially in those confections in which a gelatinous texture is not expected or desired. The supportive filling and the shell each consist of chocolate. In some embodiments, the same material used in the shell may be used for the supportive filling, and in such embodiments, the confection may have the same overall ratio of shell material to filling as a conventional filled confection not comprising the supportive filling. As such, the flavor profile of the present confection will be the same or similar to that of a conventional filled confection not comprising the supportive filling while yet providing an enhanced, less messy, consuming experience.

In one aspect, a confection comprising a shell is provided. The shell forms a single chamber having a non-gelatinous, supportive filling and at least one other filling interspersed therein. Multiple chambers may also be provided, in which case, the supportive filling and at least one other filling are interspersed within each chamber. The supportive filling has a viscosity lower than that of the at least one other filling at ambient temperature, and in some embodiments, may be a fluid at temperatures greater than ambient, or at temperatures of 27°C or greater. In some embodiments, the supportive filling may have a viscosity of from 18 Pa-s (18,000 cp) to 30 Pa-s (30,000 cp) at 37.7 °C (100°F).

In some embodiments, the at least one other filling may have a plastic viscosity of from about 18 Pa-s (18,000 cp) to about 22 Pa-s (22,000 cp) at 40°C. Stated another way, the at least one other filling has an apparent viscosity of from about 2 Pa-s (2,000 cp) to about 40 Pa-s (40,000 cp) at 37.7 °C (100°F). In some embodiments, the apparent viscosity of the at least one other filling may be from about 30 Pa-s (30,000 cp) to about 40 Pa-s (40,000 cp) at 37.7 °C (100°F), while in others, the apparent viscosity of the at least one other filling may be from about 2 Pa-s (2000 cp) to 5 Pa-s (5000 cp) at 37.7 °C (100°F). Examples of materials suitable for use as the at least one other filling include, but are not limited to, crème, nougat, caramel, nut butter, nut crème, or a combination of any number of these.

In some embodiments, the supportive filling and the shell desirably comprise the same material, and in these embodiments, as well as those where the shell and supportive filling are different, they consisist of chocolate, white chocolate, etc. Combinations of any number of these, within the shell, within the supportive filling or when the shell and supportive filling are different, may also be utilized. That is, for example, the shell and supportive filling may consist of chocolate and white chocolate.

The confection may be a single serving portion, and in such embodiments, may have a piece size of from 15 to 25 grams. In other embodiments, the confection may be provided with multiple servings, e.g., as by provision of multiple chambers separated by portioning aids, or portions of the shell of lesser thickness so that breakage at these portions is possible. The supportive filling and at least one other filling are interspersed within at least one chamber, and desirably, within each chamber.

In some embodiments, particular ratios of the supportive filling to the at least one other filling may be used to assist the supportive filling in minimizing the leakage of the at least one other filling from the confection upon breakage of the shell. In such embodiments, the supportive filling and at least one other filling may be present in a ratio that restricts, or even prevents, the flow of the at least one other filling at ambient temperature. In some embodiments, the ratio of supportive filling to at least one other filling may be from 1:5, or from 2:5.

As mentioned above, in some embodiments, the shell and the supportive material may comprise the same material, and in such embodiments, manufacturing advantages may also be provided. Any such advantages would be in addition to those provided simply by virtue of the advantage provided by the ability to co-deposit the supportive filling and at least one other filling within a chamber, i.e., that new or different manufacturing equipment is not necessarily required to produce the present confections than is required to produce conventional filled confections.

And so, the invention provides a process as defined by claim 1 for making a confection. In some embodiments, the confection may be cooled.

The supportive filling and at least one other filling are co-deposited so as to be interspersed within the chamber. The supportive filling and at least one other filling are co-deposited so that more than two contiguous interfaces are formed between the supportive filling and the at least one other filling. In some embodiments, the supportive filling and the at least one other filling are co-deposited in a swirled pattern.

### BRIEF DESCRIPTION OF THE DRAWINGS

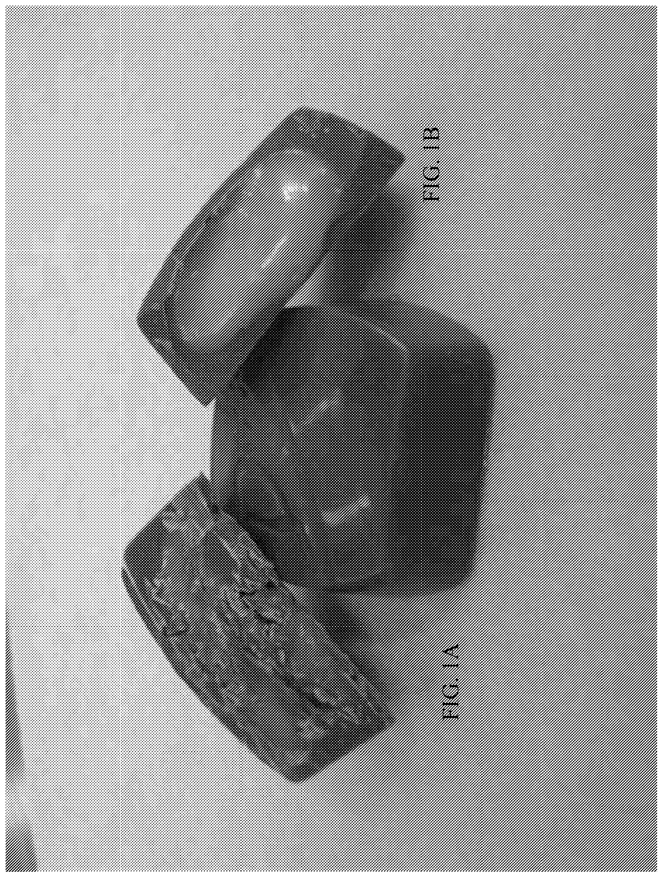

FIG. 1A is a photograph of a cross section of a confection according to one embodiment; and
FIG. 1B is a photograph of a cross section of a conventional confection.

### DETAILED DESCRIPTION

The present specification provides certain definitions and methods to better define the present invention and to guide those of ordinary skill in the art in the practice of the present invention. Provision, or lack of the provision, of a definition for a particular term or phrase is not meant to imply any particular importance, or lack thereof. Rather, and unless otherwise noted, terms are to be understood according to conventional usage by those of ordinary skill in the relevant art.

The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation.

If ranges are disclosed, the endpoints of all ranges directed to the same component or property are inclusive and independently combinable (e.g., ranges of "up to 25 wt.%, or, more specifically, 5 wt.% to 20 wt.%," is inclusive of the endpoints and all intermediate values of the ranges of "5 wt.% to 25 wt.%," etc.). As used herein, percent (%) conversion is meant to indicate change in molar or mass flow of reactant in a reactor in ratio to the incoming flow, while percent (%) selectivity means the change in molar flow rate of product in a reactor in ratio to the change of molar flow rate of a reactant.

Reference throughout the specification to "one embodiment" or "an embodiment" means that a particular feature, structure, or characteristic described in connection with an embodiment is included in at least one embodiment. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The present invention contemplates the possibility of omitting any components or steps listed herein. The present invention further contemplates the omission of any components or steps even though they are not expressly named as included or excluded from the invention.

The present process provides filled confections comprising a shell forming a single chamber having a supported filling and at least one other filling interspersed therein. The term "shell" as used herein is meant to define the periphery of the chamber, whereas the term "filling", whether supportive or otherwise, is meant to indicate a material that resides within the shell. By "interspersed herein", it is meant that the supportive filling and at least one other filling are provided in the confection in a way such that there is more than two boundaries between the supportive filling and the at least one other filing. And, as used herein, the phrase 'supportive filling' indicates a filling that can act to reduce the tendency of, or even prevent, the at least one other filling to leak out when a chamber encompassing both is broken. At least because of the novel inclusion of the supportive filling, the present confections may be enjoyed by a consumer with less (as compared to a conventional filled confection without the supportive filling), or no, leakage of the filling during the consuming experience. The consuming experience is thus enhanced.

In order to so provide, the supportive filling desirably has a viscosity lower than that of the at least one other filling at room temperature. In some embodiments, the supportive filling may actually be solid at room temperature, but yet a fluid at temperatures greater than ambient, or at processing temperatures, or at temperatures of 25°C, or 27°C or 29°C or greater. For example, some suitable supportive fillings may have a viscosity of from 18,000 cp (18 Pa-s) to 30,000 cp (30 Pa-s) at 100°F (37.7°C).

The supportive filling is non-gelatinous, i.e., does not have gelatin or any other thickening material added thereto. This is because, while gelatin and thickeners can effectively be used in certain, typically fruit based, confections, the texture that they provide, i.e., a gelled or jelly texture, is not acceptable in all confections. And, while the supportive filling may be aerated, in more preferred embodiments, it is not, as it is believed that nonaerated fillings are better able to support the at least one other filling. The supportive filling consists of chocolate

The term "chocolate", as used herein, refers to a solid or semi-plastic food and is intended to refer to all chocolate or chocolate-like compositions containing a fat-based component phase or fat-like composition. The term is intended to include standardized or nonstandardized compositions conforming to the U.S. Standards Of Identity (SOI), CODEX Alimentarius and/or other international standards and compositions not conforming to the U.S. Standards Of Identity or other international standards. The term includes dark chocolate, baking chocolate, sweet chocolate, bittersweet or semisweet chocolate, milk chocolate, buttermilk chocolate, skim milk chocolate, mixed dairy product chocolate, white chocolate, sweet cocoa and vegetable fat coating, sweet chocolate and vegetable fat coating, milk chocolate and vegetable fat coating, vegetable fat based coating, pastels including white chocolate or coating made with cocoa butter or vegetable fat or a combination of these, nutritionally modified chocolate-like compositions (chocolates or coatings made with reduced calorie ingredients) and low fat chocolates, aerated chocolates, compound coatings, non-standardized chocolates and chocolate-like compositions, unless specifically identified otherwise.

In the United States, chocolate is subject to a standard of identity established by the U.S. Food and Drug Administration (FDA) under the Federal Food, Drug and Cosmetic Act. Definitions and standards for the various types of chocolate are well established in the U.S. Nonstandardized chocolates are those chocolates which have compositions that fall outside the specified ranges of the standardized chocolates.

For example, nonstandardized chocolates result when, for example, the nutritive carbohydrate sweetener is replaced partially or completely; or when the cocoa butter, cocoa butter alternative, cocoa butter equivalent, cocoa butter extender, cocoa butter replacer, cocoa butter substitute or milkfat are replaced partially or completely; or when components that have flavors that imitate milk, butter or chocolate are added or other additions or deletions in formula are made outside the FDA standards of identify of chocolate or combinations thereof. Chocolate-like compositions are those fat-based compositions that can be used as substitutes for chocolate in applications such as panning, molding, or enrobing; for example, carob.

The supportive filling consists of chocolate, the chocolate may typically contain a nutritive carbohydrate sweetener and/or one or more sugar substitutes. Nutritive carbohydrate sweeteners with varying degrees of sweetness intensity may be any of those typically used in the art and include, but are not limited to, sucrose, e.g. from cane or beet, dextrose, fructose, lactose, maltose, glucose syrup solids, corn syrup solids, invert sugar, hydrolyzed lactose, honey, maple sugar, brown sugar, molasses and the like. The term "sugar substitute" includes bulking agents, sugar alcohols (polyols such as glycerol), or high potency sweeteners or combinations thereof. Sugar substitutes may partially replace the nutritive carbohydrate sweetener. High potency sweeteners include aspartame, cyclamates, saccharin, acesulfame-K, neohesperidin dihydrochalcone, sucralose, alitame, stevia sweeteners, glycyrrhizin, thaumatin and the like and mixtures thereof. Examples of sugar alcohols may be any of those typically used in the art and include sorbitol, mannitol, xylitol, maltitol, isomalt, lactitol and the like.

Chocolate may also contain bulking agents. The term "bulking agents" as defined herein may be any of those typically used in the art and include polydextrose, cellulose and its derivatives, maltodextrin, gum arabic, and the like.

Emulsifiers are also typically included in chocolate. Examples of suitable emulsifiers may be any of those typically used in the art and include lecithin derived from vegetable sources such as soybean, safflower, corn, etc., fractionated lecithins enriched in either phosphatidyl choline or phosphatidyl ethanolamine, or both, mono- and digylcerides, diacetyl tartaric acid esters of mono- and diglycerides (also referred to as DATEM), monosodium phosphate derivatives of mono- and diglycerides of edible fats or oils, sorbitan monostearate, hydroxylated lecithin, lactylated fatty acid esters of glycerol and propylene glycol, polyglycerol esters of fatty acids, propylene glycol mono- and di-esters of fats and fatty acids, or emulsifiers that may become approved for the US FDA-defined soft candy category. Other emulsifiers that can be used include polyglycerol polyricinoleate (PGPR), ammonium salts of phosphatidic acid, (e.g. YN) sucrose esters, oat extract, etc., any emulsifier found to be suitable in chocolate or similar fat/solid system.

One particular exemplary formulation of a dark chocolate suitable for use as the supportive filling may include 43.6% w/w sucrose, 43.6% cocoa mass, 12.3% cocoa butter, and 0.5% lecithin. The ingredients of the dark chocolate are mixed in either a continuous or batch system until thoroughly blended and then refined until a desired consistency and particle size are reached. The refined mass is then further agitated in a conch. Lastly, the dark chocolate may then be deposited to form the shell, and/or co-deposited with the at least one other filling, and the confection cooled.

An exemplary formulation of a sugar free chocolate suitable for use as the supportive filling might include 43.6 w/w % crystalline maltitol, 43.6% cocoa mass, 12.3% cocoa butter, and 0.5% lecithin. The ingredients of the sugar free chocolate are mixed in either a continuous or batch system until thoroughly blended and then refined until a desired consistency and particle size are reached. The refined mass is then further agitated in a conch. The sugar free chocolate may then be deposited to form the shell, and/or co-deposited with the at least one other filling, and the confection cooled.

An exemplary formulation of a milk chocolate suitable for use as the supportive filling may include a milk crumb comprising 13.5 w/w% cocoa liquor, 53.5% sugar, and 32.0% milk solids. One suitable formulation process may involve kneading the milk solids and sugar together with the cocoa liquor such that controlled crystallization can occur. The crumb is then dried to the desired final moisture content. Drying can involve vacuum drying alone or drying can occur in combination with drum driers. 84.4 w/w% of the milk crumb is then combined with 15% cocoa butter, 05% lecithin, and 0.1% flavor. These ingredients are then mixed in either a continuous or batch system until thoroughly blended and then refined until a desired consistency and particle size are reached. The refined mass is then further agitated in a conch. The milk chocolate may then be deposited to form the shell, and/or co-deposited with the at least one other filling, and the confection cooled.

One particular exemplary formulation for a fudge suitable for use as a supportive filling, not part of the claimed invention, may include, 41.36 % w/w sweetened condensed milk, 11.69% butter, 19.65% granulated sugar, 25.85% semisweet chocolate, 1.03% glucose syrup and 0.42% vanilla. The fudge could be formulated by combining the sweetened condensed milk, sugar and butter in a steam jacketed kettle and heated with stirring until the temperature reaches 65.6 °C (150°F). The vanilla may be added during mixing. Heating continues until the mass reaches a temperature of about 114 °C (238°F) at which point the steam is turned off and the chocolate is added with vigorous stirring. Next, the glucose syrup is added with stirring. The mass is cooled with stirring until it reaches a temperature of 82.2-87.8 °C (180-190°F). The fudge may then be deposited to form the shell, and/or co-deposited with the at least one other filling, and the confection cooled.

One particular exemplary formulation of a nougat suitable for use as a supportive filling, not part of the claimed invention, might include 0.37% w/w egg albumen, 3.13% water, 6.59% sugar, 2.00% water, 36.63% sugar 36.63% glucose syrup and 14.65% water. The nougat may be prepared by dissolving the egg albumen in the 3.13 wt.% water while the 6.59% sugar is dissolved in the 2.00% water. The egg albumen and sugar solution are then mixed together and aerated. In a separate vessel, the 36.63% sugar is dissolved in the 14.65% water and the glucose syrup is added with mixing. This sugar solution is then boiled to 141°C. The boiled sugar solution is then added to the whipped egg albumen/sugar solution in a thin stream. The nougat may then be deposited to form the shell, and/or co-deposited with the at least one other filling, and the confection cooled.

The at least one other filling may have a plastic viscosity of from about 18 Pa-s (18,000 cp) to about 22 Pa-s (22,000 cp) at 40°C. In some embodiments, the at least one other filling flows at ambient, or room, temperature. Stated another way, the at least one other filling has an apparent viscosity of from about 2,000 cp (2 Pa-s) to about 40,000 cp (40 Pa-s) at 100°F (37.7°C). In some embodiments, the apparent viscosity of the at least one other filling may be from about 30,000 cp (30 Pa-s) to about 40,000 cp (40 Pa-s) at 100°F (37.7°C), while in others, the apparent viscosity of the at least one other filling may be from about 2000 cp (2 Pa-s) to 5000 cp (5 Pa-s) at 100°F (37.7°C).

Whereas the supportive filling will not include gelatin, or desirably not be aerated, the at least one other filling may be either of these. Examples of materials suitable for use as the at least one other filling include, but are not limited to, crème, nougat, caramel, nut butter, nut crème, fruit fillings, fondant including fondant-based crèmes, frappe, fruit juice; vegetable juice; fruit puree; fruit pulp; vegetable pulp; vegetable puree; fruit sauce; vegetable sauce; honey; maple syrup; molasses; corn syrup; sugar syrup; polyol syrup; hydrogenated starch hydrolysate syrup; emulsions; vegetable oil; glycerin; propylene glycol; ethanol; liqueurs; chocolate syrup, dairy-based liquids such as milk, cream, or a combination of any number of these.

One exemplary formulation of a fondant suitable for use as the at least one other filling may include 60 % w/w sugar, 15% glucose syrup, and 25% water. The fondant may be formulation by dissolving the sugar and glucose syrup in water. The solution is boiled until it reaches 117° C or about 88% solids. The evaporated syrup is then agitated while cooling to induce rapid crystallization. The fondant may then be co-deposited with the supportive filling, and the confection cooled.

A crème suitable for use as the at least one other filling may also be prepared using the fondant, and one or more other confectionary compositions. For example, one suitable crème may include from 75% to about 95% fondant and from about 5% to about 25% of a frappe. Suitable frappes may include, for example, 1.64 % w/w egg albumen, 3.10% water, 32.87% sugar, 46.10% glucose syrup and 16.29% water. The frappe could be prepared by mixing the egg albumen and 3.10% water and allowing the mixture to stand at 4.4 °C (40°F) for 24 hours. Meanwhile, the sugar, glucose syrup and 16.29% water are dissolved together and boiled until they reach 107 °C (225°F). The sugar syrup is then cooled to 60 °C (140°F) and the egg albumen solution is whisked into the cooled sugar syrup. Whipping desirably continues until a density of 0.35 to 0.5 is reached. The crème is then prepared by remelting the fondant with gentle mixing while folding in the frappe. The temperature is increased to 60 °C (140°F) and flavors, colors, etc. can be added. The crème may then be co-deposited with the supporting filling, and the confection cooled.

One particular exemplary formulation of a caramel suitable for use as the at least one other filling may include 9.43% w/w water, 14.12% white granular sugar, 14.12% brown sugar, 24.16% glucose syrup, 25.73% sweetened condensed milk, 11.29% hydrogenated vegetable fat, 0.71% glyceryl monostearate and 0.44% salt. The caramel may be formulated by mixing the ingredients together and heating slowly until the ingredients are thoroughly dissolved and mixed. Heating is continued with mixing until a temperature of about 118°C 121°C or 128°C is reached, for soft, medium and hard caramels, respectively. Soft caramels are expected to be suitable for use as the at least one other filling, while hard caramels may, in fact, be suitable for use as the supportive filling. The caramel may then be co-deposited with the supportive filling, and the confection cooled.

It is to be understood that some supportive fillings may, in some embodiments, be suitable for use as the at least one other filling and vice versa. That is to say, the identity of the material for use as the supportive and/or at least one other filling is not critical. What is important is the viscosity of each. Indeed, embodiments wherein the supportive filling and the at least one other filling are the same material, at different viscosities, are envisioned.

The supportive filling and at least one other filling may be provided in weight percentages (based on the total weight of the supportive filling and the at least one other filling) that enhance the ability of the supportive filling to support the at least one other filling. Higher percentages of the supportive filling may be desired, for example, for those embodiments, wherein materials at the lower end of the suitable viscosity range are used as the supportive filling. For example, in those embodiments wherein the supportive filling has a viscosity of 18,000 cp (18 Pa-s) at 100°F (37.7°C), a higher percentage of supportive filling may be used. In those embodiments wherein the supportive filling has a viscosity of about 30,000 cp (30 Pa-s) at 100°F (37.7°C) a lower weight percentage of supportive filling may provide sufficient support. Of course, a suitable percentage of each will also depend upon the viscosity of the filling chosen for use as the at least one other filling.

Generally speaking, suitable ranges of the supportive filling can be from 15 wt.% to 45 wt.%, or from 20 wt.% to 40 wt.% or from 25 wt.% to 35 wt.%. Suitable weight percentages of the at least one other filling may range from 55 wt.% to 85 wt.%, or from 60 wt.% to 80 wt.%, or from 65 wt.% to 75 wt.%, based upon the total weight of the supportive filling and at least one other filling.

In some embodiments, the supportive filling and the shell desirably comprise the same material. Such embodiments are not only advantageous from a manufacturing perspective, in that an additional material need not be prepared and handled, but may also be desirable in certain consuming markets wherein a bimodal flavor and/or texture profile is desired. That is, while it may be desirable in some confections to provide an additional flavor or texture via the supportive filling, in others, it may be desirable to provide only the flavor of the shell and the at least one other filling.

In those embodiments, wherein the shell and supportive filling comprise the same material, the shell may be made thinner than is conventional and the saved material used for the supportive filling. This particular embodiment is not only advantageous from a manufacturing perspective, in that this embodiment of the confections would not require additional expenditure for materials for the supportive filling, but also from a consuming experience in that the consumer would still experience the same ratio of shell, i.e. chocolate, to filling material as is experienced when consuming a conventional filled chocolate.

Stated another way, in some embodiments, the ratio of the total weight of shell and supportive material, whether they are the same or different materials, to the weight of the at least one other filling of the present confections is within 20%, or 15%, or 10%, or even 5% of the ratio of the weight of the shell material to the weight of the filling in a conventional filled confection not comprising the supportive filling. In some embodiments, the ratio of the total weight of shell and supportive material, whether they are the same or different materials, to the weight of the at least one other filling of the present confections is substantially the same as the ratio of the weight of the shell material to the weight of the filling in a conventional filled confection not comprising the supportive filling.

The confection may also contain particulates, known as inclusions in the art, either incorporated into any of the components thereof, or as garnishes on the finished confection. Indeed, in embodiments wherein inclusions are included in the at least one other filling, the supportive filling may act to support them as well so that the distribution of the inclusions does not shift during packaging, handling, shipping etc. That is, any desired inclusion may be incorporated into the at least one other filling, in which case, the supportive filling may reduce any amount of settling, or other vertical displacement, that the inclusion would otherwise experience in confections not comprising the supportive filling. In some embodiments, the supportive filling may substantially prevent any such settling or vertical displacement of the inclusion(s) within the confection.

Those of ordinary skill in the art are well aware of the many inclusions that may desirably be included in filled confections and any of these may be used. Examples of suitable inclusions include, but are not limited to, fruit, including crystallized, lyophilized or dried fruit, nuts, coconut, crisped rice or other grains or seeds, cocoa beans; coffee beans; milk powders; freeze dried fruit; freeze dried vegetables; fat particles; cocoa powder; sucrose; starch; polyols such as xylitol, erythritol, sorbitol, mannitol, maltitol, isomalt, hydrogenated starch hydrosylates; waxes or combinations of any number of these

The confection may be provided as a single serving format, or may be provided as a multiple joined portions, i.e., as a bar having portioning aids between multiple chambers along which the chambers may be separated from each other. If provided in a multiple serving format, the supportive filling and the at least one other filling may be provided in at least one chamber, may be provided in all chambers, or any number of chambers in between. Desirably, in a multiple serving format, the supportive filling and the at least one other filling will be interspersed within each chamber. If provided in a single serving format, the confection may have a piece size of from 15 to 25 grams.

Those of ordinary skill in the confectionary art are well aware of sources of the materials suitable for use as the shell, supportive filling and/or at least one other filling and/or are capable of manufacturing them in house according to known methods. And, the identity of each component and the method of its manufacture or source, are not particularly critical to the practice of the present invention. What is important is that the confection has a shell encompassing a single chamber, and in some embodiments, multiple chambers, that has/have a non-gelatinous supportive filling and at least one other filling interspersed therein. By "interspersed herein", it is meant that the supportive filling and at least one other filling are provided in the confection in a way such that there is more than two boundaries between the supportive filling and the at least one other filing. In other words, the term "shell" as used herein is meant to define the periphery of the chamber, whereas the term "filling", whether supportive or otherwise, is meant to indicate a material that resides wholly within the shell, i.e., that is wholly surrounded and/or encompassed by the shell.

Although there are more than two, or multiple, boundaries between the supportive filling and the at least one other filling within the chamber, the interaction between the supportive filling and the at least one other filling is desirably limited to physical contact only at the actual boundary, with limited diffusion of either the supportive filling into the at least one other filling and vice versa.

One embodiment of a confection is shown in FIG. 1A, whereas FIG. 1B shows a conventional confection, i.e., not comprising a supportive filling. As can be seen, the at least one other filling is leaking from the chamber of the conventional confection shown in FIG. 1B, whereas the at least one other filling in the confection shown in FIG. 1A is supported by the supportive filling and remains substantially within the chamber.

The invention is a process as defined by claim 1 for providing the confections.

The shell is formed via deposition of the shell material into a mold cavity or impression. Semi-rigid molds or flexible molds such as silicone rubber molds or rigid metal molds are suitable. The shell material, as well as the supportive filling and at least one other filling may be supplied to the deposition equipment from a temperature controlled or jacketed hopper, and in this way, the viscosity of the shell material, supportive filling and at least one other filling may be controlled and or adjusted.

Once the first portion of the shell has been deposited, the supportive filling and the at least one other filling are co-deposited therein. For example, the supportive filling and the at least one other filling may be fed through alternating apertures into a deposition nozzle. In some embodiments, the supportive filling and the at least one other filling may be deposited in a swirled or striped pattern via a nozzle arrangement including a plurality, e.g., at least two or as many as 16 or 20, of apertures or bores within a manifold plate or nozzle plate which all feed into a deposition nozzle having a single bore or passageway. The single bore or passageway may taper from its upstream end to its downstream or exit end. The apertures or bores in the manifold or nozzle plate maybe arranged in a circle or other pattern near the inner wall of the nozzle to provide swirling. The apertures or bores in the manifold or nozzle plate may be the same size or differently sized. For example, in some embodiments, every other aperture or bore may each have the same diameter, while adjacent apertures or bores may have different diameters. In other embodiments, adjacent apertures or bores may increase in size around the inner periphery of the nozzle.

The deposition pattern of the supportive filling and the at least one other filling may be controlled or adjusted by changing their relative flow rates and flow directions using known deposition equipment and methods. Typically, pistons may be used to control the rate of flow of each component through the apertures or nozzles.

The deposition nozzle is positioned in proximity to the desired mold. The shell material is deposited into the mold. The supportive filling and the at least one other filling are then caused to flow into the mold at the same, or different flow rates. The supportive filling and the at least one other filling then spread laterally within the shell to take the shape of the shell while one or both of the fillings are still being injected or deposited into the first portion of the shell. The flow of the fillings is stopped with the desired amount has been deposited, and may be stopped simultaneously or sequentially. Once the flow of both fillings has stopped, the second portion of the shell is deposited completing the shell, forming the chamber, and enclosing the fillings.

Although the supportive filling and at least one other filling are deposited together, they desirably remain distinct from each other with minimal, or substantially no, bleeding of one component into another. The amount of bleeding or migration of the supportive filling and the at least one other filling may limited, or even substantially avoided, so as to obtain distinct regions or portions of each component by upon cooling of the confection, and in some embodiments, the process comprising a cooling step to accelerate the rapid setting or rapid cooling of the supportive filling reduces its fluidity, increases its viscosity and substantially avoids mixing or blending of the supportive filling with the at least one other filling and/or shell.

In some embodiments, cooling of the confection may result in the supportive filling undergoing a substantial increase in viscosity within about two minutes, preferably within about one minute, for example within about 10 seconds of being deposited. Rapid setting of the supportive filling can also help to prevent vertical displacement of the supportive filling, the at least one other filling, and any optional particulates. Such displacement can result in the migration of the supportive filling towards the shell region resulting in loss of support for the at least one other filling. Rather, in preferred embodiments of the confection, distinct portions of the supportive filling and at least one other filling may be substantially uniformly swirled, distributed or present throughout the confection rather than being striated or laminated, or highly concentrated at the top or bottom of the confection.

Desirably, the temperature of the supportive filling and the at least one other filling are minimized so that when they come into contact, whether it be in the shell or within the co-deposition nozzle, bleeding between the two can be minimized or prevented. However, the filling temperatures should not be so low that they gel or set prematurely in the manifold or co-deposition nozzle or in upstream material mixing and handling equipment.

In some embodiments of the invention, the temperature of the supportive filling when it contacts that at least one other filling may be slightly higher than the setting temperature of the supportive filling. The setting temperature will vary depending upon the particular supportive filling utilized, and may be readily determined experimentally by measuring the temperature of the supportive filling as it is cooled and observing the temperature at which its viscosity suddenly or rapidly increases, a fudge-like consistency is obtained, or the supportive filling solidifies.

For example, the temperature of the supportive filling when it comes into contact with the at least one other filling may be less than 25°C, or less than 15°C, or less than 10°C, or less than 5°C higher than the temperature at which it solidifies. In some embodiments, the temperature of the supportive filling when it contacts the at least one other filling is from 1°C to 15°C, or from 2°C to 10°C higher than the setting temperature of the supportive filling.

Appropriate deposition temperatures for each of the supportive filling and the at least one other filling will similarly depend upon what materials are utilized. Generally speaking, the temperature of the supportive filling and the at least one other filling upon contact within the codeposition nozzle may range from 25°C to 35°C. In some embodiments the deposition temperatures range from 27°C to 40°C while in other embodiments, the deposition temperatures range from 28°C to 32°C.

Cooling to achieve the desired supportive filling and the at least one other filling contact temperature may be accomplished by cooling each component prior to introduction into the manifold or co-deposition nozzle under ambient temperature conditions and/or with a conventional heat exchanger or cooling unit.

The process can be operated continuously, or batchwise to provide multitextured confections having a supportive filling, without the decentering, shell breakage and/or filling leakage problems that can be encountered during processing, packaging, shipping and storage of filled confections not comprising the supportive filling. These advantages are provided without the use of gelatinous, and in some embodiments, aerated, supportive fillings. Because a supportive filling is provided, the confections also exhibit less leakage of the at least one other filling during consumption. In some embodiments, the flavor profile of the confection is preserved by using the same material for the shell and the supportive filling.

## Claims

1. A process for making a confection, comprising:
depositing a first portion of a shell through an outer concentric nozzle into a mold;
co-depositing a non-gelatinous, supportive filling and at least one other filling through two inner concentric nozzles into the first portion of the shell,
wherein the supportive filling and the at least one other filling spread laterally within the shell to take the shape of the shell while one or both of the fillings are still being deposited into the first portion of the shell;
depositing a second portion of the shell to form a chamber enclosing the co-deposited supportive filling and at least one other filling,
wherein the supportive filling and the shell each consist of chocolate,
wherein the supportive filling does not have gelatin or any other thickening material added thereto,
and wherein the supportive filling acts to reduce the tendency of, or prevent, the at least one other filling from leaking out when the chamber is broken,
wherein the supportive filling and at least one other filling are co-deposited so as to be interspersed within the chamber so that more than two contiguous interfaces are formed between the supportive filling and at least one other filling.

2. The process of claim 1, wherein the supportive filling and the at least one other filling are co-deposited in a swirled pattern.

3. The process of any preceding claim, further comprising cooling the confection.

4. The process of any preceding claim, wherein the temperature of the supportive filling when it contacts the at least one other filling is higher than the setting temperature of the supportive filling.

5. The process of any preceding claim, wherein the temperature of the supportive filling when it contacts the at least one other filling is less than 25°C higher than the temperature at which the supportive filling solidifies, or less than 15°C higher than the temperature at which the supportive filling solidifies, or less than 10°C higher than the temperature at which the supportive filling solidifies, or less than 5°C higher than the temperature at which the supportive filling solidifies.

6. The process of any preceding claim, wherein the temperature of the supportive filling when it contacts the at least one other filling is from 1°C to 15°C higher than the setting temperature of the supportive filling, or from 2°C to 10°C higher than the setting temperature of the supportive filling.

7. The process of any preceding claim, wherein the temperature of the supportive filling and the at least one other filling upon contact within the codeposition nozzle ranges from 25°C to 40°C.

8. The process of any preceding claim, wherein the supportive filling and the at least one other filling are cooled prior to introduction into the co-deposition nozzle under ambient temperature conditions and/or with a conventional heat exchanger or cooling unit.

9. The process of any preceding claim, wherein the at least one other filling is crème, nougat, caramel, nut butter, nut crème, or a combination of any number of these.

## Patentansprüche

1. Verfahren zum Herstellen einer Süßware, das Folgendes umfasst:
Aufbringen eines ersten Abschnitts einer Ummantelung durch eine äußere konzentrische Düse in eine Form;
gemeinsames Aufbringen einer nicht gelatineartigen stützenden Füllung und mindestens einer weiteren Füllung durch zwei innere konzentrische Düsen in den ersten Abschnitt der Ummantelung,
wobei die stützende Füllung und die mindestens eine weitere Füllung sich seitlich innerhalb der Ummantelung ausbreiten, um die Form der Ummantelung anzunehmen, während eine oder beide Füllungen weiterhin in den ersten Abschnitt der Ummantelung aufgebracht werden;
Aufbringen eines zweiten Abschnitts der Ummantelung, um eine Kammer auszubilden, welche die gemeinsam aufgebrachte stützende Füllung und mindestens eine weitere Füllung umschließt,
wobei die stützende Füllung und die Ummantelung jeweils aus Schokolade bestehen,
wobei die stützende Füllung keine Gelatine oder jeglichen anderen hinzugefügten Verdicker aufweist, und wobei die stützende Füllung dahingehend wirkt, die Neigung zum Auslaufen der mindestens einen weiteren Füllung einzuschränken oder zu verhindern, wenn die Kammer zerbrochen wird,
wobei die stützende Füllung und mindestens eine weitere Füllung gemeinsam aufgebracht werden, um in der Kammer untereinandergehoben zu werden, sodass mehr als zwei aneinandergrenzende Grenzflächen zwischen der stützenden Füllung und mindestens einer weiteren Füllung ausgebildet werden.

2. Verfahren nach Anspruch 1, wobei die stützende Füllung und die mindestens eine weitere Füllung gemeinsam in einem verwirbelten Muster aufgebracht werden.

3. Verfahren nach einem vorhergehenden Anspruch, ferner umfassend Kühlen der Süßware.

4. Verfahren nach einem vorhergehenden Anspruch, wobei die Temperatur der stützenden Füllung, wenn sie die mindestens eine weitere Füllung berührt, höher als die Erstarrungstemperatur der stützenden Füllung ist.

5. Verfahren nach einem vorhergehenden Anspruch, wobei die Temperatur der stützenden Füllung, wenn sie die mindestens eine weitere Füllung berührt, um weniger als 25 °C höher als die Temperatur ist, bei der sich die stützende Füllung verfestigt, oder um weniger als 15 °C höher als die Temperatur ist, bei der sich die stützende Füllung verfestigt, oder um weniger als 10 °C höher als die Temperatur ist, bei der sich die stützende Füllung verfestigt, oder um weniger als 5 °C höher als die Temperatur ist, bei der sich die stützende Füllung verfestigt.

6. Verfahren nach einem vorhergehenden Anspruch, wobei die Temperatur der stützenden Füllung, wenn sie die mindestens eine weitere Füllung berührt, um 1 °C bis 15 °C höher als die Erstarrungstemperatur der stützenden Füllung ist oder um 2 °C bis 10 °C höher als die Erstarrungstemperatur der stützenden Füllung ist.

7. Verfahren nach einem vorhergehenden Anspruch, wobei die Temperatur der stützenden Füllung und die der mindestens einen weiteren Füllung bei Berührung in der Düse zum gemeinsamen Aufbringen im Bereich von 25 °C bis 40 °C liegen.

8. Verfahren nach einem vorhergehenden Anspruch, wobei die stützende Füllung und die mindestens eine weitere Füllung vor Einführung in die Düse zum gemeinsamen Aufbringen bei Umgebungstemperaturbedingungen und/oder mit einem herkömmlichen Wärmetauscher oder einer Kühleinheit gekühlt werden.

9. Verfahren nach einem vorhergehenden Anspruch, wobei die mindestens eine weitere Füllung Creme, Nougat, Karamel, Nussbutter, Nusscreme oder eine Kombination aus einer beliebigen Anzahl davon ist.

## Revendications

1. Procédé de fabrication d'une confiserie, comprenant :
le dépôt d'une première partie d'une coque par l'intermédiaire d'une buse concentrique extérieure dans un moule ;
le co-dépôt d'un fourrage de support non gélatineux et d'au moins un autre fourrage par l'intermédiaire de deux buses concentriques intérieures dans la première partie de la coque,
dans lequel le fourrage de support et l'au moins un autre fourrage s'étalent latéralement à l'intérieur de la coque pour prendre la forme de la coque pendant qu'un fourrage ou les deux fourrages sont en train d'être déposés dans la première partie de la coque ;
le dépôt d'une seconde partie de la coque pour former une chambre entourant le fourrage de support et l'au moins un autre fourrage co-déposés,
dans lequel le fourrage de support et la coque sont chacun constitués de chocolat,
dans lequel le fourrage de support ne comprend aucune gélatine ni aucun autre matériau épaississant ajouté,
et dans lequel le fourrage de support agit pour réduire la tendance à couler ou pour empêcher l'au moins un autre fourrage de couler lorsque la chambre est brisée,
dans lequel le fourrage de support et l'au moins un autre fourrage sont co-déposés de façon à être intercalés à l'intérieur de la chambre de sorte que plus de deux interfaces contiguës sont formées entre le fourrage de support et l'au moins un autre fourrage.

2. Procédé selon la revendication 1, dans lequel le fourrage de support et l'au moins un autre fourrage sont co-déposés suivant un motif en torsade.

3. Procédé selon l'une quelconque des revendications précédentes, comprenant en outre le refroidissement de la confiserie.

4. Procédé selon l'une quelconque des revendications précédentes, dans lequel la température du fourrage de support lorsqu'il entre en contact avec l'au moins un autre fourrage est supérieure à la température de durcissement du fourrage de support.

5. Procédé selon l'une quelconque des revendications précédentes, dans lequel la température du fourrage de support lorsqu'il entre en contact avec l'au moins un autre fourrage est supérieure de moins de 25 °C à la température à laquelle le fourrage de support se solidifie, ou supérieure de moins de 15 °C à la température à laquelle le fourrage de support se solidifie, ou supérieure de moins de 10 °C à la température à laquelle le fourrage de support se solidifie, ou supérieure de moins de 5 °C à la température à laquelle le fourrage de support se solidifie.

6. Procédé selon l'une quelconque des revendications précédentes, dans lequel la température du fourrage de support lorsqu'il entre en contact avec l'au moins un autre fourrage est supérieure de 1 °C à 15 °C à la température de durcissement du fourrage de support, ou supérieure de 2 °C à 10 °C à la température de durcissement du fourrage de support.

7. Procédé selon l'une quelconque des revendications précédentes, dans lequel la température du fourrage de support et de l'au moins un autre fourrage suite au contact avec la buse de co-dépôt est comprise entre 25 °C et 40 °C.

8. Procédé selon l'une quelconque des revendications précédentes, dans lequel le fourrage de support et l'au moins un autre fourrage sont refroidis avant l'introduction dans la buse de co-dépôt dans des conditions de température ambiante et/ou à l'aide d'un échangeur de chaleur ou d'une unité de refroidissement classique.

9. Procédé selon l'une quelconque des revendications précédentes, dans lequel l'au moins un autre fourrage est de la crème, du nougat, du caramel, du beurre de noix, de la crème de noix ou une combinaison d'un nombre quelconque de ceux-ci.
